# EUROPEAN PATENT APPLICATION

(11) **EP 4 797 544 A1**
(43) Date of publication of application: **26.08.2026**
(21) Application number: 26155653.4
(22) Date of filing: 02.02.2026
(51) Int. Cl.: H04B 1/04, H04B 7/06

(54) **SPLITTER OR PASS-THROUGH CONFIGURABLE POWER DIVIDER**

(30) Priority: 25.02.2025 IN 202511016538; 07.05.2025 US 202519201571
(71) Applicant: Honeywell International Inc., Charlotte, NC 28202 (US)
(72) Inventor: KORI, Manoj, Charlotte, 28202 (US); FERGUSON, Paul D., Charlotte, 28202 (US); PAI, Swapna Somanatha, Charlotte, 28202 (US)
(74) Representative: Haseltine Lake Kempner LLP

(57) **Abstract**

Techniques are disclosed that enable a circuit to perform one or both of: splitting a first RF signal into a second RF signal and a third RF signal in response to one or more RF switches having a first on-off configuration and a phase shifter applying a first phase shift, wherein the second RF signal and the third RF signal are substantially equal in power, wherein the second RF signal is routed to a first output port, and wherein the third RF signal is routed to a second output port; and passing the first RF signal to the second output port in response to the one or more RF switches having a second on-off configuration and the phase shifter applying a second phase shift, wherein the first on-off configuration is different than the second on-off configuration and the first phase shift is different than the second phase shift.

## Description

This application claims the benefit of IN Provisional Patent Application No. 202511016538, filed 25 February 2025, the entire contents of which is incorporated herein by reference.

### TECHNICAL FIELD

The disclosure relates to radio frequency (RF) networks.

### BACKGROUND

The airspace may be shared by various types of aircraft such as commercial aircraft, general aviation (GA) aircraft, and unmanned aircraft systems (UASs). GA aircraft and UASs may be smaller, lighter weight, and more power sensitive than other aircraft (e.g., commercial aircraft). As the airspace becomes busier, GA aircraft and UASs may need to be equipped with onboard aircraft safety systems (e.g., Traffic Alert and Collision Avoidance System (TCAS)). The onboard aircraft safety systems may recommend maneuvers for the corresponding aircraft to perform.

### SUMMARY

In general, the disclosure is directed to devices, systems, and techniques relating to a configurable power divider for splitting or passing RF signals. In some examples, aircraft may be equipped with a transponder and an onboard safety system, such as a Traffic Alert and Collision Avoidance System (TCAS). The transponder may transmit data to other systems. For instance, a TCAS of a first aircraft may send an interrogation signal (e.g., a signal requesting information) to a second aircraft. The transponder of the second aircraft may transmit the requested information to the first aircraft. The TCAS of the first aircraft may use the information to detect potential collision risks. If a potential collision risk is detected, the TCAS may issue a resolution advisory which may include a recommended maneuver (e.g., climb or descend) to avoid the potential collision. However, in some examples, the TCAS/transponder system may be too heavy and/or power-demanding for certain types of aircraft (e.g., smaller and lighter weight aircraft).

In some examples, directional TCAS interrogation is desired, such that the TCAS can transmit its interrogation signal via a directional beam towards a specific target (e.g., aircraft) or direction rather than, for example, broadcasting the interrogation signal via an omnidirectional beam in all directions. In one example, directional interrogation is achieved via beamforming, such that typically directional TCAS interrogation may require at least two transmit signal generation paths. The two transmit signal generation paths may be identical and the relative phase between the transmit signal generation paths may be independently controlled for beamforming. Such two or more transmit signal generation path designs may provide an on-board safety system with directional interrogation capabilities. However, such designs may present one or more disadvantages. As one example, by including two or more transmit signal generation paths, such designs may unnecessarily and undesirably increase the cost, weight, size, and power requirements of the on-board safety system.

In accordance with one or more techniques of this disclosure, an onboard safety system with directional interrogation capabilities may be achieved with only one transmit signal generation path. For instance, a radio frequency (RF) network of an onboard safety system may include a single transmit signal generation path and a power divider that can be configured to operate in pass-through mode or splitter mode. In the pass-through mode, the RF signal may be directed to a single antenna for transmission. In the splitter mode, the RF signal may be split such that each signal is substantially equal in power and directed to a respective antenna for transmission (e.g., via a directional beam formed via beamforming). By including one transmit signal generation path and a configurable power divider for splitting or passing RF signals, techniques of this disclosure may desirably reduce the cost, weight, size, and power consumption of on-board safety systems for aircraft while still providing directional transmission capabilities.

For ease of understanding, techniques of this disclosure may be discussed with respect to on-board safety systems (e.g., TCAS) of aircraft. However, techniques of this disclosure are not so limited. For instance, techniques of this disclosure may be applied to any electronic beam steering application and may be implemented in multiple ways to adapt to different frequency bands.

In one example, this disclosure describes a circuit comprising: an input port configured to receive a first radio frequency (RF) signal; a first output port; a second output port; a phase shifter; and one or more RF switches wherein the circuit is configured to: split the first RF signal into a second RF signal and a third RF signal in response to the one or more RF switches having a first on-off configuration and the phase shifter applying a first phase shift, wherein the second RF signal and the third RF signal are substantially equal in power, wherein the second RF signal is routed to the first output port, and wherein the third RF signal is routed to the second output port; and pass the first RF signal to the second output port in response to the one or more RF switches having a second on-off configuration and the phase shifter applying a second phase shift, wherein the first on-off configuration is different than the second on-off configuration and the first phase shift is different than the second phase shift.

In another example, this disclosure describes a method comprising: receiving, by a first input port of a circuit comprising one or more RF switches and a phase shifter, a first radio frequency (RF) signal; and performing, by the circuit, one or both of: splitting the first RF signal into a second RF signal and a third RF signal in response to the one or more RF switches having a first on-off configuration and the phase shifter applying a first phase shift, wherein the second RF signal and the third RF signal are substantially equal in power, wherein the second RF signal is routed to a first output port, and wherein the third RF signal is routed to a second output port; and passing the first RF signal to the second output port in response to the one or more RF switches having a second on-off configuration and the phase shifter applying a second phase shift, wherein the first on-off configuration is different than the second on-off configuration and the first phase shift is different than the second phase shift.

In another example, this disclosure describes a Traffic Alert and Collision Avoidance System (TCAS) comprising: a receiver; a first antenna; a second antenna; and a transmitter comprising: an input port configured to receive a first radio frequency (RF) signal; a first output port connected to the first antenna; a second output port connected to the second antenna; a phase shifter; and one or more RF switches wherein the TCAS is configured to: split the first RF signal into a second RF signal and a third RF signal in response to the one or more RF switches having a first on-off configuration and the phase shifter applying a first phase shift, wherein the second RF signal and the third RF signal are substantially equal in power, wherein the second RF signal is routed to the first output port, and wherein the third RF signal is routed to the second output port; and pass the first RF signal to the second output port in response to the one or more RF switches having a second on-off configuration and the phase shifter applying a second phase shift, wherein the first on-off configuration is different than the second on-off configuration and the first phase shift is different than the second phase shift.

The details of one or more examples of the disclosure are set forth in the accompanying drawings and the description below. Other features, objects, and advantages of the disclosure will be apparent from the description and drawings, and from the claims.

### BRIEF DESCRIPTION OF DRAWINGS

FIG. 1 is a block diagram illustrating an RF system, in accordance with one or more techniques of this disclosure.
FIG. 2 is a conceptual circuit diagram illustrating a configurable power divider, in accordance with one or more techniques of this disclosure.
FIG. 3A is a table illustrating example values for a configuration of a configurable power divider, in accordance with one or more techniques of this disclosure.
FIG. 3B is a conceptual circuit diagram illustrating an equivalent circuit of FIG. 2 in power splitter mode, in accordance with one or more techniques of this disclosure.
FIG. 4A is a table illustrating example values for a configuration of a configurable power divider, in accordance with one or more techniques of this disclosure.
FIG. 4B is a conceptual circuit diagram illustrating an equivalent circuit of FIG. 2 in pass-through mode, in accordance with one or more techniques of this disclosure.
FIG. 5 is a flowchart illustrating an example operation of a configurable power divider, in accordance with one or more techniques of this disclosure.

Like reference characters refer to like elements throughout the figures and description.

### DETAILED DESCRIPTION

In general, the disclosure is directed to devices, systems, and techniques relating to a configurable power divider for splitting or passing RF signals. In some examples, aircraft may be equipped with a transponder and an onboard safety system, such as a Traffic Alert and Collision Avoidance System (TCAS). The transponder may transmit data to other systems. For instance, a TCAS of a first aircraft may send an interrogation signal (e.g., a signal requesting information) to a second aircraft. The transponder of the second aircraft may transmit the requested information to the first aircraft. The TCAS of the first aircraft may use the information to detect potential collision risks. If a potential collision risk is detected, the TCAS may issue a resolution advisory which includes a recommended maneuver (e.g., climb or descend) to avoid the potential collision. The TCAS/transponder system, however, may be too heavy and/or power-demanding for certain types of aircraft (e.g., smaller and lighter weight aircraft).

In some examples, directional TCAS interrogation is desired, such that the TCAS can transmit an interrogation signal via a directional beam towards a specific target (e.g., aircraft) or direction rather than, for example, broadcasting the interrogation signal via an omnidirectional beam in all directions. In one example, directional interrogation is achieved via beamforming, such that typically directional TCAS interrogation requires at least two transmit signal generation paths. The two transmit signal generation paths may be identical, and the relative phase between the transmit signal generation paths may be independently controlled for beamforming. Such two or more transmit signal generation path designs may provide an on-board safety system with directional interrogation capabilities. However, such designs may present one or more disadvantages. As one example, by including two or more transmit signal generation paths, such designs may unnecessarily and undesirably increase the cost, weight, size, and power requirements of the on-board safety system.

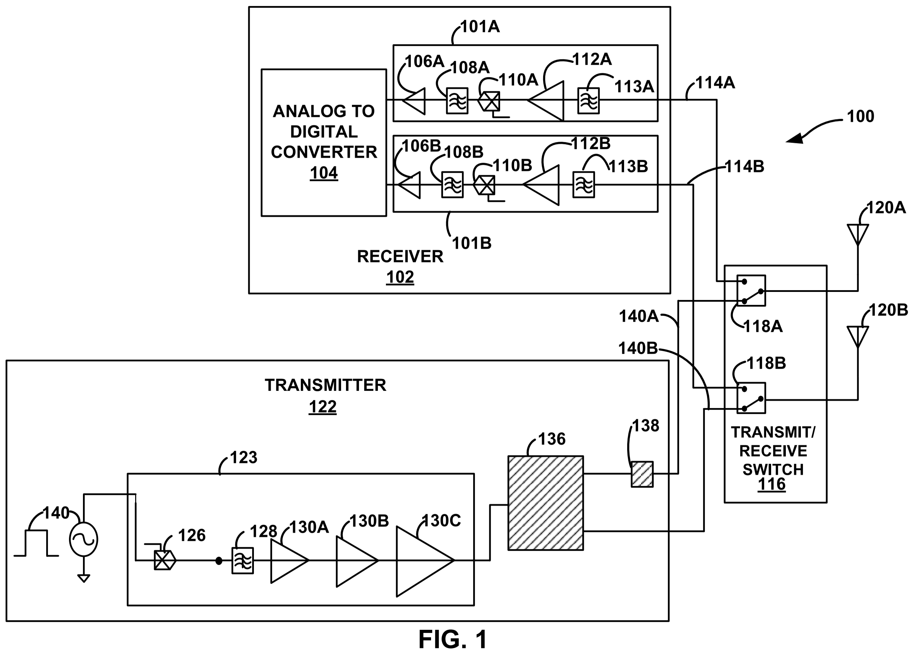

FIG. 1 is a block diagram illustrating an RF System 100, in accordance with one or more techniques of this disclosure. RF system 100 may be a component or subsystem of a TCAS/ transponder RF system and may be included in any aircraft, such as a commercial aircraft, a general aviation (GA) aircraft, an unmanned aircraft system (UAS), etc. RF system 100 may be referred to as an on-board safety system 100, TCAS 100, or system 100.

As shown in the example of FIG. 1, system 100 includes receiver 102, signals 114A and 114B (collectively, "signals 114"), signals 140A and 140B (collectively, "signals 140"), transmitter 122, transmit/receive switch 116, and antennas 120A and 120B (collectively, "antennas 120"). Receiver 102 includes analog to digital converter 104, receive path 101A, and receive path 101B (collectively, "receive paths 101"). Receive paths 101 may respectively include first filter 113, amplifier 112, mixer 110, second filter 108, and intermediate frequency amplifier 106. Transmitter 122 includes signal 140, configurable power divider 136, phase shifter 138, and transmit signal generation path 123. Transmit signal generation path 123 includes mixer 126, filter 128, pre-driver amplifier 130A, driver amplifier 130B, and power amplifier 130C (collectively, "amplifiers 130"). Transmit/receive switch 116 may include switch 118A and switch 118B.

An aircraft may be equipped with RF system 100 to enhance the safety of an aircraft by detecting nearby aircraft and providing collision avoidance guidance In some examples, TCAS 100 may transmit one or more interrogation signals requesting information from the surrounding aircraft's transponders. Each of the surrounding aircraft's transponders may transmit information (e.g., for the TCAS to process) relating to the altitude and identification of the aircraft associated with the transponder. The return signals may then be processed by TCAS 100 to determine information related to the distance, altitude, identity, speed, and direction of the surrounding aircraft. Further, TCAS 100 may use the distance, direction, altitude, and identity information of the surrounding aircraft to determine potential collision risks. In some examples, if TCAS 100 determines that there is a potential collision risk one or more advisories may be generated. An advisory may provide instructions to the pilot or, in some examples, such as for UAS, to the aircraft directly. The instructions may include actions to be performed, such as climb, descend, maintain altitude, etc.

In one example, system 100 may receive or transmit signals via antennas 120. Antennas 120 may be positioned in close proximity such that they may function as a phased array that further allows a directional beam to be formed. Antennas 120 may be separate or contained within a single unit. Antennas 120 may each represent multiple antennas and / or a beamforming network. In one example, there may be a beamforming network placed between the TCAS and antennas 120 that further processes the transmit signals 140 or receive signals 114 to form a directional beam. In some examples, the beamforming network may include two input ports. In one example, if a beamforming network is used, there may be more than two antennas. In one example, antennas 120 may be dipoles, monopoles, printed antenna elements, or other antenna implementations.

Transmit/receive switch 116 may switch system 100 from transmitting to receiving signals, and vice-versa. In one example, transmit/receive switch 116 prevents interference between the transmitting and receiving functions of system 100. In some examples, transmit/receive switch 116 may include two switches 118A and 118B (collectively, "switches 118"). Switch 118A may be used to switch between transmit signal 140A and receive signal 114A. Switch 118A may route signals to/from antenna 120A. Switch 118B may be used to switch between transmit signal 140B and receive signal 114B. Switch 118B may route signals to/from antenna 120B. One or both of switches 118 may be a mechanical switch or a solid-state switch.

In one example, antenna 120A may receive signal 114A and antenna 120B may receive signal 114B. Signals 114 may be radio frequency (RF) signals, analog signals, high power RF signals, etc. Transmit/receive switch 116 may be switched to receive mode such that signals 114A and 114B may be routed from antennas 120 to receiver 102. Signal 114A may travel along receive path 101A and signal 114B may travel along receive path 101B. Receive path 101A and receive path 101B may be identical, such that both receive paths include the same components. For example, receive path 101A may include first filter 113A, amplifier 112A, mixer 110A, second filter 108A, and intermediate frequency amplifier 106A. Receive path 101B may include first filter 113B, amplifier 112B, mixer 110B, second filter 108B, and intermediate frequency amplifier 106B.

Signals 114 may enter receiver 102 and travel along their respective receive paths 101. In one example signals 114 may first be filtered by filters 113. In some examples, filters 113 are bandpass filters, band stop (e.g., reject) filters, high pass filters, low pass filters, or filters with variable control such that the band that passes or stops can be modified. In some examples, filters 113 may remove unwanted signals or noise from signals 114. The output of filters 113 may be filtered signals 114 which may enter amplifiers 112. Amplifiers 112 may be low noise amplifiers, such that filtered signals 114 are amplified with minimal noise added. The amplified signals 114 may then enter mixers 110. In some examples, mixers 110 may also be driven by local oscillators and may shift the frequency of signals 114. For instance, signals 114 may be operating at a very high frequency and mixers 110 may shift signals 114 to a lower frequency (e.g., an intermediate frequency (IF)).

Signals 114 may then enter second filters 108. Second filters 108 may be intermediate frequency filters. Second filters 108 may further filter signals 114, removing some noise and unwanted signals from the intermediate frequency range to ensure that only specific frequencies of signals 114 are passed through to amplifier 106. Amplifier 106 may be an intermediate frequency amplifier and may amplify signals 114.

Signals 114 output from receive paths 101 may be further processed by analog to digital converter 104 (herein, "A/D converter 104"). A/D converter 104 may convert signals 114 to digital signals such that, signals 114 may be processed by e.g., a digital processing system of TCAS 100.

In one example, TCAS 100 may be onboard a first aircraft and receive, via antennas 120, signals 114 containing information from a second aircraft. For instance, the information may include distance, direction, altitude, speed and/or identity of the second aircraft. Signals 114 may be routed to receiver 102 which may process signals 114 to generate a clean, amplified, and/or converted version of signals 114, such that in one example signals 114 (and the information signals 114 contain, e.g., distance, relative direction, etc.) may be used by TCAS 100 to determine potential collision risks with the second aircraft.

In another example, to receive information from one or more surrounding aircraft (e.g., the second aircraft mentioned above) TCAS 100 may first transmit, via antennas 120, one or more signals 140 e.g., that request information from the surrounding aircraft's transponders. In some examples, it may be desired that TCAS 100 transmits signals 140 in a specific direction (e.g., that TCAS 100 has beamforming capabilities). Specifically, directional TCAS interrogation may be desired, where the TCAS can direct its interrogation signal at a specific aircraft. Typically, to achieve such directional capabilities (e.g., to achieve beamforming capabilities) the TCAS requires at least two transmit signal generation paths.

In accordance with one or more techniques of this disclosure, TCAS 100 and specifically transmitter 122 includes only one transmit signal generation path 123. Transmit/ receive switch 116 may be switched to transmit mode such that signal(s) 140, output by transmitter 122, may be routed to antennas 120. Transmitter 122 may generate signal 140 which may be a modulated signal such that the properties (e.g., amplitude, frequency, or phase) of signal 140 are modulated in accordance with the information to be transmitted. Signal 140 may enter transmit signal generation path 123 and be routed to mixer 126.

Mixer126 may convert (e.g., shift) signal 140 to the desired frequency for transmission (e.g., the transmit frequency). Signal 140 may then enter filter 128. In some examples, filter 128 may be a bandpass filter, a band stop (e.g., reject) filter, a high pass filter, a low pass filter, or a filter with variable control such that the band that passes or stops can be modified. In some examples, filter 128 may remove noise from signal 140 before amplification by amplifiers 130. Signal 140 may first pass through pre-driver amplifier 130A to boost signal 140 for further processing by driver amplifier 130B. Driver amplifier 130B may further boost signal 140 such that signal 140 is strong enough for power amplifier 130C. In some examples, power amplifier 130C may provide the final high-power amplification needed for signal 140 to be transmitted effectively. Signal 140, output from transmit signal generation path 123, may be routed to configurable power divider 136.

In some examples, configurable power divider 136 may output one or both of signals 140A and 140B. In one example, phase shifter 138 may control (e.g., adjust, shift, etc.) the relative phase between signals 140A and 140B (e.g., phase shifter 138 may implement beamforming techniques). Phase shifter 138 may be any phase shifter that may control the phase or other properties of signals 140A. For instance, phase shifter 138 may be a higher power discrete phase shifter, a continuously variable analog phase shifter, etc. In one example, phase shifter loss may be less than 0.3 dB. In some examples, phase shifter 138 may control the phase of signals 140A in discrete steps. By controlling the phase of signals 140A, phase shifter 138 may be able to direct the transmission of signal 140. For instance, signals 140A and 140B may be transmitted via a directional beam (e.g., a beam aimed in a specific/desired direction) from antennas 120.

In accordance with one or more techniques of this disclosure, an onboard safety system with directional interrogation capabilities may be achieved with only one transmit signal generation path. For instance, configurable power divider 136 may be configured to operate in pass- through mode or splitter mode. In some examples, configurable power divider 136 may be a configurable high power RF power divider. In pass-through mode, configurable power divider 136 passes through signal 140 such that signal 140 is output as signal 140B (e.g., signal 140 is not split) and routed to antenna 120B. As illustrated by FIG. 1, in splitter mode configurable power divider 136 may split signal 140 into signal 140A and signal 140B. Signal 140A and signal 140B may be substantially equal in power and directed to antennas 120. In the example illustrated by FIG. 1, signal 140A may be directed to antenna 120A and signal 140B may be directed to antenna 120B. By RF system 100 including configurable power divider 136, capable of splitting (e.g., for beamforming capabilities) or passing (e.g., for transponder and distance measuring equipment transmissions) signal 140, RF system 100 may include only one transmit signal generation path 123 (e.g., as opposed to two or more transmit signal generation paths). Thus, techniques of this disclosure may desirably reduce the cost, weight, size, and power consumption of on-board safety systems while still providing directional transmission capabilities.

For ease of understanding, techniques of this disclosure may be discussed with respect to on-board safety systems (e.g., TCAS 100) of aircraft. However, techniques of this disclosure are not so limited. For instance, techniques of this disclosure may be applied to any electronic beam steering application and may be implemented in multiple ways to adapt to different frequency bands.

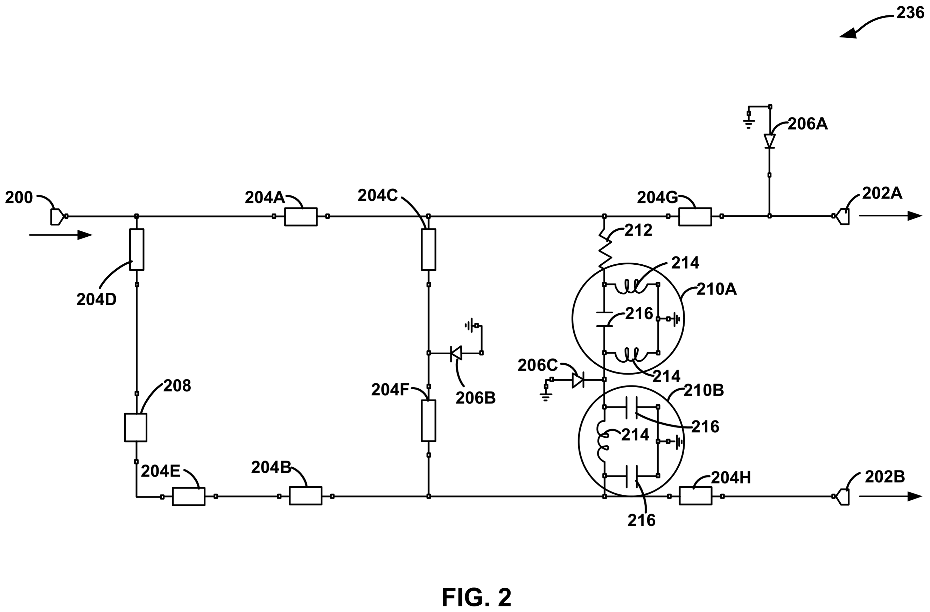

FIG. 2 is a conceptual circuit diagram illustrating configurable power divider 236, in accordance with one or more techniques of this disclosure. Configurable power divider 236 may be an example of configurable power divider 136 of FIG. 1. In one example, configurable power divider 236 may be a configurable high power RF power divider.

As shown in FIG. 2, configurable power divider 236 includes input port 200, output ports 202A and 202B (collectively, "output ports 202"), transmission line elements (TLEs) 204A, 204B, 204C, 204D, 204E, 204F, 204G, and 204H (collectively, "TLEs 204"), diodes 206A, 206B, and 206C (collectively, "diodes 206"), phase shifter 208, lumped elements 210A and 210B (collectively, "lumped elements 210"), and resistor 212.

Configurable power divider 236 may receive an input signal (e.g., signal 140 output from transmit signal generation path 123 of FIG.1) via input port 200. Configurable power divider 236 may be configured to operate in pass-through mode or splitter mode. In pass-through mode, configurable power divider 236 may pass the input signal such that the input signal may be output by output port 202B. In splitter mode configurable power divider 236 may split the input signal into two signals that are substantially equal in power. Configurable power divider 236 may route a first signal of the two signals to output port 202A and a second signal of the two signals to output port 202B, or vice versa.

In one example, substantially equal in power (e.g., almost, approximately, or roughly equal in power) may mean that the two signals are equal in power for a range of plus or minus 1dB. For instance, two signals may be substantially equal in power if the first signal has a power level of 60dBm and the second signal has a power level of 60 +/-1dBm.TLEs 204 of configurable power divider 236 may each represent a quarter wave network. In some examples, TLEs 204 may be referred to as an array of quarter wave networks. In one example, TLEs may be realized using lumped elements or transmission lines. TLEs 204 may provide impedance matching and be switched in or out of configurable power divider 236 to realize splitter or pass-through mode. By selecting certain characteristic impedances for each of TLEs 204 minimal reflection occurs, resulting in low losses for configurable power divider 236. In some examples, the characteristic impedances of TLE 204F and 204C are scaled (relative to the impedances of TLEs 204A, 204B, 204D and 204E) by impedance scaling constant *N*₁ and impedance scaling constant 1/*N*₂ respectively. In one example, the power split of the input signal after input port 200 and impedance matching of input and output impedances of configurable power divider 236 are decided by the values of *N*₁ and *N*₂. In one example, the ideal impedance match is obtained at, *N*₁ *_{*} N₂* ≅ 2.4. Where, ≅ may be an 'approximately equal to' symbol that may indicate a range of plus or minus 5%. For instance, plus or minus 5% of 2.4. The exact *N*₁ and *N*₂ values may be driven by practical considerations (e.g., component availability, pricing, implementation in a microstrip, etc.) and as such, the values of *N*₁ and *N*₂ may be manipulated as long as *N*₁ * *N*₂ ≅ 2.4. In one example *N*₁ = 1 and in another example and *N*₁ = 0.7.

In the example illustrated by FIG. 2, TLEs 204A, 204B, 204D and 204E may each have characteristic impedances (*z*₀) of 70.7 ohms, TLEs 204G and 204H may each have characteristic impedances of 50 ohms, TLE 204C may have a characteristic impedance of *z*₀ = 70.7/*N*₂, and TLE 204F may have a characteristic impedance of *z*₀ = 70.7 * *N*₁. In one example, if *N*₁ = 1 TLE 204C may have a characteristic impedance ≅ 30 ohms and TLE 204F may have a characteristic impedance ≅ 70.7 ohms. Further, if *N*₁ = 0.7, TLE 204C may have a characteristic impedance ≅ 20 ohms and TLE 204F may have a characteristic impedance ≅ 50 ohms.

In one example, the input impedance at input port 200 may be 50 ohms, the output impedance at output port 202A may be 50 ohms, and the output impedance at output port 202B may be 50 ohms. In this way, the input and output impedances of configurable power divider 236 are approximately (e.g., plus or minus 5% of the input impedance) constant (e.g., matched) in both splitter and pass-through configurations for maximum power transfer. For instance, configurable power divider 236 with an input impedance ≅ 50 ohms at input port 200 and an output impedance ≅ 52 ohms at output ports 202A and 202B is approximately matched in splitter configuration In one example, when configurable power divider 236 is configured in pass-through mode the output port of output ports 202 that is not outputting a signal may not be matched (e.g., one of output ports 202 may be highly mismatched). In some examples, the input and output impedances of configurable power divider 236 may be chosen by design to provide an impedance match at input port 200 and output ports 202A and/ or 202B.

Resistor 212 may be an isolation resistor with a resistance of 100 ohms that may be used to provide RF isolation between output port 202A and output port 202B. However, an isolation resistor (e.g., resistor 212) may include a phase length (e.g., may result in poor isolation in configurable power divider 236), such that one or more of the signals in configurable power divider 236 may encounter an undesirable phase delay or shift. Lumped elements 210 may be included in configurable power divider 236 to cancel out the phase length of resistor 212.

Lumped elements 210 may be cascaded and referred to as a cascade of lumped element networks. In one example, lumped elements 210 may each be lumped element quarter wave networks that use lumped components (e.g., inductors 214 and capacitors 216) to simulate the impedance transformation of a quarter-wave transmission line. In one example, lumped elements 210 may introduce opposite phase shifts. For instance, lumped element 210A may introduce approximately +90 degree phase shift and lumped element 210 B may introduce approximately -90 degree phase shift (or vice versa). In this way, the net effective phase length of the path that includes resistor 212 and lumped elements 210 is 0 degrees.

Further phase shifting may be implemented by phase shifter 208. Phase shifter 208 may be a switched phase shifter. There may be multiple ways of implementing phase shifter 208. In one example, phase shifter 208 may be a switched line reflection phase shifter using a 90 degree hybrid and two PIN diodes. The switched line reflection phase shifter may include a first line length and a second line length. The two PIN diodes may either short to ground (e.g., forward bias), thus bypassing one of the line lengths, or open circuit (reverse biased), thus not bypassing any of the line lengths and producing a longer path for the signal to travel. In one example, phase shifter 208 may shift from 0 degrees to +/- 180 degrees. In some examples, phase shifter 208 may provide fast switching between phase states (e.g., 0 degrees and 180 degrees) and precise control over the phase in discrete steps.

Diodes 206 may be any device that controls the direction of the current flow or the signal path. In some examples, diodes 206 may be RF switches, Gallium Arsenide Field-Effect Transistors (FETs), Metal-Oxide-Semiconductor FETs, Micro-Electro-Mechanical Systems switches, Positive-Intrinsic-Negative (PIN) diodes, etc. In one example, PIN diodes may include three layers: a P-type layer of semiconductor material that is doped with acceptor impurities, resulting in positive charge carriers, an intrinsic layer of undoped semiconductor material which may be electrically neutral, and an N-type later of semiconductor material that is doped with donor impurities, resulting in negative charge carriers. Each of diodes 206 may have two states, a forward bias state (e.g., an on state, low impedance state, RF ground, etc.) and a reverse bias state (e.g., an off state, high impedance state, RF open, etc.). In the forward bias state, diodes 206 may conduct current and in the reverse bias state diodes 206 may conduct little to no current. In one example, each of diodes 206 may be switched between an on or off state.

In accordance with one or more techniques of this disclosure, configurable power divider 236 may be electronically configured via one or more of diodes 206 and phase shifter 208 to operate in a single output pass-through mode or splitter mode. In splitter mode configurable power divider 236 may split the input signal into two signals that are substantially equal in power and direct each signal to one of output ports 202. In pass-through mode, configurable power divider 236 passes through the input signal such that the input signal is output at one of output ports 202. By configurable power divider 236 switching between splitter and pass-through mode via the electronic configuration of diodes 206 and phase shifter 208, configurable power divider 236 may alleviate the need for two or more transmit signal generation paths in an on-board safety system (e.g., system 100). Thus, techniques of this disclosure may desirably reduce the cost, weight, size, and power consumption of on-board safety systems while still providing directional transmission capabilities.

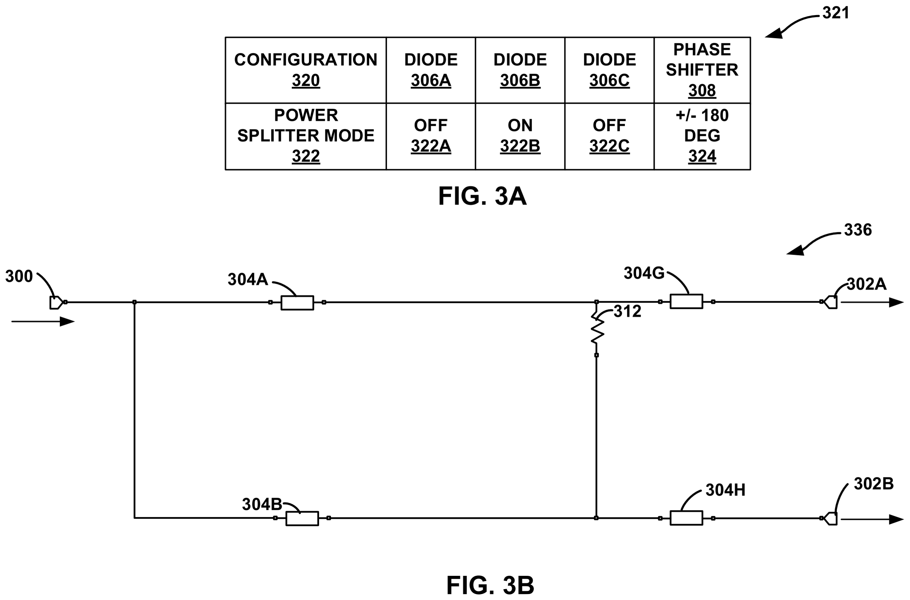

FIG. 3A includes table 321 illustrating example values for configuration 320 of a configurable power divider (e.g., configurable power divider 236 of FIG. 2), in accordance with one or more techniques of this disclosure. As illustrated by FIG. 3A, configuration 320 is power splitter mode 322. In one example, configurable power divider 236 configured in power splitter mode 322 may include an operating frequency of 1030 MHz to 1090 MHz. FIG. 3A includes diode 306A in an off state 322A, diode 306B in an on state 322B, and diode 306C in an off state 322C (collectively, "diodes 306"), and phase shifter 308 set to plus or minus 180 degrees 324. Diodes 306 and phase shifter 308 may be examples of diodes 206 and phase shifter 208 of FIG. 2.

FIG. 3B is a conceptual circuit diagram illustrating an equivalent circuit of configurable power divider 236 of FIG. 2 configured in power splitter mode 322, in accordance with one or more techniques of this disclosure. For instance, configurable power divider 336 may approximate the behavior of configurable power divider 236 in splitter mode and illustrate only the necessary (e.g., active, functional, needed, used, etc.) components.

As illustrated in FIG. 3B, configurable power divider 336 includes input port 300, TLEs 304A, 304B, 304G, and 304H (collectively, "TLEs 304"), resistor 312, and output ports 302A and 302B (collectively, "output ports 302"). Configurable power divider 336, TLEs 304, resistor 312, input port 300, and output ports 302 may be examples of configurable power divider 236, TLEs 204, resistor 212, input port 200, and output ports 202 of FIG. 2.

With phase shifter 308 of FIG. 3A (e.g., 208 of FIG. 2) set to plus or minus 180 degrees 324, phase shifter 208, TLEs 204D, and 204E are effectively switched (e.g., shorted) out of configurable power divider 336 and as such are not shown in configurable power divider 336. Diode 306C is set to an off state 322C and effectively places resistor 312 across output 302A and output 302B, such that lumped elements 210 are not shown in configurable power divider 336. Diode 306B is set to an on state 322B and effectively switches TLEs 204C and 204F out of configurable power divider 336, and as such TLEs 204C and 204F are not shown in configurable power divider 336. Diode 306A is set to an off state 322A and effectively switches diode 306A out of configurable power divider 336, and as such diode 306A is not shown in configurable power divider 336.

Configurable power divider 336 is shown in splitter mode such that RF power input into input port 300 is equally split between the two identical paths that branch from input port 300. In one example, signals reflected from output port 302A are isolated from output port 302B and signals reflected from output port 302B are isolated from output port 302A. In one example, configurable power divider 336 may achieve the functionality of a conventional Wilkinson power divider. However, unlike a Wilkinson power divider, configurable power divider 336 may operate with a single transmit signal generation path resulting in reduced cost, weight, size, and power requirements for system 100 when compared to existing on-board safety systems. In this way, diodes 306 and phase shifter 308 may be set to specific values, states, and/ or modes of operation to electronically configure configurable power divider 236 to operate in power splitter mode 322, illustrated by configurable power divider 336.

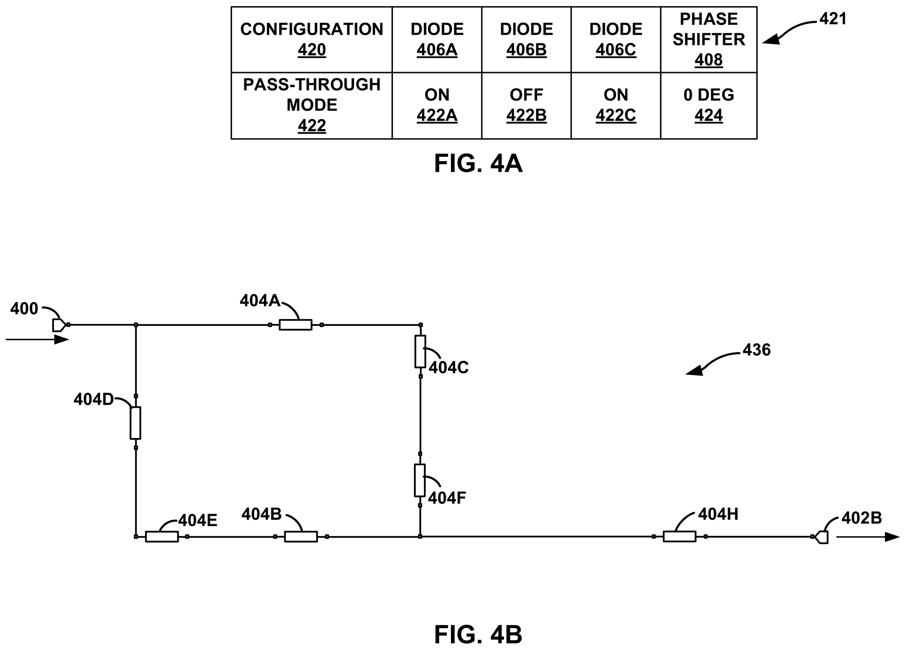

FIG. 4A includes table 421 illustrating example values for configuration 420 of a configurable power divider (e.g., configurable power divider 236 of FIG. 2), in accordance with one or more techniques of this disclosure. As illustrated by FIG. 4A, configuration 420 is pass-through mode 422. In one example, configurable power divider 236 configured in pass-through mode 422 may include an operating frequency of 1025 MHz to 1150 MHz. FIG. 4A includes diode 406A in an on state 422A, diode 406B in an off state 422B, and diode 406C in an on state 422C (collectively, "diodes 406"), and phase shifter 408 set to 0 degrees 424. Diodes 406 and phase shifter 408 may be examples of diodes 206 and phase shifter 208 of FIG. 2.

FIG. 4B is a conceptual circuit diagram illustrating an equivalent circuit of configurable power divider 236 of FIG. 2 in pass-through mode 422, in accordance with one or more techniques of this disclosure. For instance, configurable power divider 436 may approximate the behavior of configurable power divider 236 in pass-through mode and illustrates only the necessary (e.g., active, functional, needed, used, etc.) components.

As illustrated, configurable power divider 436 includes input port 400, TLEs 404A, 404B, 404C, 404D, 404E, 404F, and 404H (collectively, "TLEs 404"), output port 402B. Configurable power divider 436, TLEs 404, input port 400, and output port 402B may be examples of configurable power divider 236, TLEs 204, input port 200, and output port 202B of FIG. 2.

With phase shifter 408 of FIG. 4A (e.g., 208 of FIG. 2) set to 0 degrees 424 no phase shift or delay may be introduced to the signal by phase shifter 408 and as such TLEs 404D and 404E are functional components of configurable power divider 436. Diode 406C is set to an on state 422C which ensures that lumped elements 210 effectively switch resistor 212 out of configurable power divider 436, and as such resistor 212 and lumped elements 210 are not shown in configurable power divider 436. Diode 406B is set to an off state 422B such that TLEs 404C and 404F are functional components of configurable power divider 436. Diode 406A is set to an on state 422A such that diode 406A is a functional component of configurable power divider 436.

In the example illustrated by FIG. 4B, the signal received at input port 400 may be output at output port 402B and isolated (e.g., isolated from output port 202A).

Configurable power divider 436 is shown in pass-through mode 422 such that the signal input into input port 400 is passed through to output port 402B. In this way, diodes 406 and phase shifter 408 may be set to specific values, states, and/ or modes of operation to electronically configure configurable power divider 236 to operate in pass-through mode 422, illustrated by configurable power divider 436.

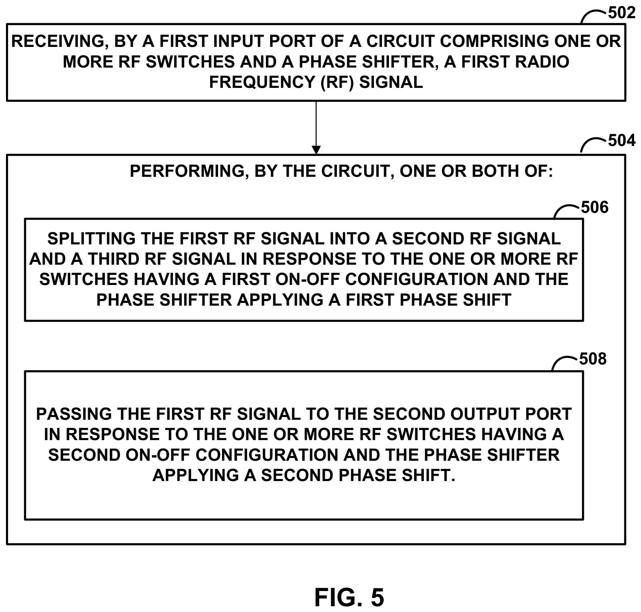

FIG. 5 is a flowchart illustrating an example operation of a configurable power divider, in accordance with one or more techniques of this disclosure. The example operation of FIG. 5 is described with respect to configurable power divider 236 of FIG. 2.

Configurable power divider 236 comprises input port 200, output ports 202, one or more RF switches 206, and phase shifter 208. Configurable power divider 236 receives, by input port 200, a first RF signal (502). In one example, RF switches 206 may comprise first PIN diode 206A, second PIN diode 206B, and third PIN diode 206C. In some examples, phase shifter 208 may be a switched phase shifter (e.g., switched line reflection phase shifter) and include a 90 degree hybrid (e.g., quadrature coupler) and two PIN diodes.

Configurable power divider 236 performs one or both of: splitter or pass-through mode (504). In splitter mode configurable power divider 236 splits the first RF signal into a second RF signal and a third RF signal in response to RF switches 206 having a first on-off configuration and phase shifter 208 applying a first phase shift (506). The second RF signal and the third RF signal are substantially equal in power. The first RF signal may be routed to first output port 202A and the second RF signal may be routed to second output port 202B. The first on-off configuration may include first PIN diode 206A being in an off state, second PIN diode 206B being in an on state, and third PIN diode 206C being in an off state. The first phase shift may be 180 degrees or -180 degrees.

In pass-through mode configurable power divider 236 passes the first RF signal to second output port 206B in response to RF switches 206 having a second on-off configuration and phase shifter 208 applying a second phase shift (508). The first on-off configuration is different than the second on-off configuration and the first phase shift is different than the second phase shift. The second on-off configuration may include first PIN diode 206A being in an on state, second PIN diode 206B being in an off state, and third PIN diode 206C being in the on state. The second phase shift may be 0 degrees.

In one example, the on state of diodes 206 may be a forward bias state and the off state of diodes 206 may be a reverse bias state. In splitter mode, after the second RF signal and the third RF signal are output by their respective output ports 202, the relative phase between the second and third RF signals may be controlled in discrete steps or in a continuously varying manner by a high-power phase shifter (e.g., high-power phase shifter 138). For instance, high-power phase shifter 138 may be a type of ferrite phase shifter and may shift the phase of high-power signals (e.g., signals with power levels from a hundred watts to several kilowatts). In some examples, the relative phase between the second RF signal and the third RF signal may be controlled for beamforming.

In one example, beamforming may include the output of first output port 202A being routed to first antenna 120A for transmission and the output of second output port 202B being routed to second antenna 120B for transmission. In one example, the output of first output port 202A and the output of second output port 202B may be routed to a beamforming network that sits between output ports 202 and antennas 120. The beamforming network, configurable power divider 236, and antennas 120 may all be contained in a single housing. In some examples, the beamforming network may split or combine received signals and output the signals to multiple radiating elements such that most of the energy of the signals is radiated in a desired direction.

In one example, an input impedance at input port 200 of configurable power divider 236 may be approximately impedance matched to a source impedance and the output impedance at second output port 202B may be approximately impedance matched to the output impedance of configurable power divider 236. This simultaneous impedance match and a power split of the signal after input port 200 may be decided by values of constants *N*₁ and *N*₂. In one example, an ideal impedance match is obtained when *N*₁ multiplied with *N*₂ is approximately equal to 2.4.

Configurable power divider 236 may further include resistor 212 and lumped elements 210. Resistor 212 may be an isolation resistor and lumped elements 210 may each be lumped element quarter wave networks that use lumped components (e.g., inductors and capacitors) to generate phase shifts equivalent to quarter-wave or three quarter wave transmission lines. In one example, lumped elements 210 may be configured to cancel out a phase length of isolation resistor 212 to increase (e.g., maximize, nearly maximize, etc.) isolation between first output port 202A and second output port 202B. In one example, lumped elements 210 may introduce opposite phase shifts. For instance, if isolation resistor 212 has a 10 degree phase length, then lumped element 210A may have a +80 degree phase shift while lumped element 210B may have a -90 degree phase shift. In this way the total phase length of lumped element 210A, lumped element 210B, and isolation resistor 212 is 0 degrees.

The techniques of this disclosure may be implemented in a wide variety of devices or apparatuses, including, an integrated circuit (IC) or a set of ICs (e.g., a chip set). Various components, modules, or units are described in this disclosure to emphasize functional techniques of devices configured to perform the disclosed techniques, but do not necessarily require realization by different hardware units. Rather, as described above, various units may be combined in a hardware unit or provided by a collection of interoperative hardware units, including one or more processors, in conjunction with suitable software and/or firmware.

The techniques of this disclosure may also be described in the following examples.

Example 1. A circuit comprising: an input port configured to receive a first radio frequency (RF) signal; a first output port; a second output port; a phase shifter; and one or more RF switches wherein the circuit is configured to: split the first RF signal into a second RF signal and a third RF signal in response to the one or more RF switches having a first on-off configuration and the phase shifter applying a first phase shift, wherein the second RF signal and the third RF signal are substantially equal in power, wherein the second RF signal is routed to the first output port, and wherein the third RF signal is routed to the second output port; and pass the first RF signal to the second output port in response to the one or more RF switches having a second on-off configuration and the phase shifter applying a second phase shift, wherein the first on-off configuration is different than the second on-off configuration and the first phase shift is different than the second phase shift.

Example 2. The circuit of example 1, wherein the first phase shift is 180 degrees or -180 degrees.

Example 3. The circuit of example 1 or example 2, wherein the second phase shift is 0 degrees.

Example 4. The circuit of any of examples 1-3, wherein the one or more RF switches comprise a first PIN diode, a second PIN diode, and a third PIN diode, wherein the first on-off configuration comprises the first PIN diode being in an off state, the second PIN diode being in an on state, and the third PIN diode being in the off state.

Example 5. The circuit of any of examples 1-4, wherein the second on-off configuration comprises the first PIN diode being in an on state, the second PIN diode being in an off state, and the third PIN diode being in the on state.

Example 6. The circuit of any of examples 4-5, wherein the on state is a forward biased state, and wherein the off state is a reverse biased state.

Example 7. The circuit of any of examples 1-6, wherein a discrete or a continuously variable high-power phase shifter controls a relative phase between the second RF signal and the third RF signal.

Example 8. The circuit of example 7, wherein the high-power phase shifter controls the relative phase between the second RF signal and the third RF signal for beamforming.

Example 9. The circuit of any of examples 1-8, wherein an output of the first output port is routed to a first antenna, and wherein an output of the second output port is routed to a second antenna.

Example 10. The circuit of any of examples 1-9, wherein an input impedance at the input port is approximately impedance matched with the source impedance and one or both of the first output port or the second output port are impedance matched to the load impedances.

Example 11. The circuit of example 10, wherein the impedance matching and a power split after the input port are decided by values of *N*₁ and *N*₂, wherein *N*₁ corresponds to a first impedance scaling constant, and wherein *N₂* corresponds to a second impedance scaling constant.

Example 12. The circuit of example 11, wherein *N*₁ multiplied with *N*₂ is approximately equal to 2.4.

Example 13. The circuit of any of examples 1-12, further comprising, one or more quarter wave networks configured to cancel out a phase length of an isolation resistor to increase isolation between the first output port and the second output port.

Example 14. The circuit of any of examples 1-13, wherein the phase shifter is a switched phase shifter comprising a 90-degree hybrid and two PIN diodes.

Example 15. A method comprising: receiving, by a first input port of a circuit comprising one or more RF switches and a phase shifter, a first radio frequency (RF) signal; and performing, by the circuit, one or both of: splitting the first RF signal into a second RF signal and a third RF signal in response to the one or more RF switches having a first on-off configuration and the phase shifter applying a first phase shift, wherein the second RF signal and the third RF signal are substantially equal in power, wherein the second RF signal is routed to a first output port, and wherein the third RF signal is routed to a second output port; and passing the first RF signal to the second output port in response to the one or more RF switches having a second on-off configuration and the phase shifter applying a second phase shift, wherein the first on-off configuration is different than the second on-off configuration and the first phase shift is different than the second phase shift.

Example 16. The method of example 15, wherein the first phase shift is 180 degrees or -180 degrees and wherein the second phase shift is 0 degrees.

Example 17. The method of example 15 or example 16, wherein the one or more RF switches comprise a first PIN diode, a second PIN diode, and a third PIN diode, wherein the first on-off configuration comprises the first PIN diode being in an off state, the second PIN diode being in an on state, and the third PIN diode being in the off state, and wherein the second on-off configuration comprises the first PIN diode being in an on state, the second PIN diode being in an off state, and the third PIN diode being in the on state.

Example 18. A Traffic Alert and Collision Avoidance System (TCAS) comprising: a receiver; a first antenna; a second antenna; and a transmitter comprising: an input port configured to receive a first radio frequency (RF) signal; a first output port connected to the first antenna; a second output port connected to the second antenna; a phase shifter; and one or more RF switches wherein the TCAS is configured to: split the first RF signal into a second RF signal and a third RF signal in response to the one or more RF switches having a first on-off configuration and the phase shifter applying a first phase shift, wherein the second RF signal and the third RF signal are substantially equal in power, wherein the second RF signal is routed to the first output port, and wherein the third RF signal is routed to the second output port; and pass the first RF signal to the second output port in response to the one or more RF switches having a second on-off configuration and the phase shifter applying a second phase shift, wherein the first on-off configuration is different than the second on-off configuration and the first phase shift is different than the second phase shift.

Example 19. The TCAS of example 18, wherein: the first phase shift is 180 degrees or -180 degrees, the second phase shift is 0 degrees, the one or more RF switches comprise a first PIN diode, a second PIN diode, and a third PIN diode, the first on-off configuration comprises the first PIN diode being in an off state, the second PIN diode being in an on state, and the third PIN diode being in the off state, and the second on-off configuration comprises the first PIN diode being in an on state, the second PIN diode being in an off state, and the third PIN diode being in the on state.

Example 20. The TCAS of example 18 or example 19, wherein a high-power phase shifter controls a relative phase between the second RF signal and the third RF signal in discrete steps for beamforming, wherein beamforming comprises transmission of the second RF signal via the first antenna and transmission of the third RF signal via the second antenna.

Various examples of the disclosure have been described. These and other examples are within the scope of the following claims.

## Claims

1. A circuit comprising:
an input port configured to receive a first radio frequency (RF) signal;
a first output port;
a second output port;
a phase shifter; and
one or more RF switches
wherein the circuit is configured to:
split the first RF signal into a second RF signal and a third RF signal in response to the one or more RF switches having a first on-off configuration and the phase shifter applying a first phase shift, wherein the second RF signal and the third RF signal are substantially equal in power, wherein the second RF signal is routed to the first output port, and wherein the third RF signal is routed to the second output port; and
pass the first RF signal to the second output port in response to the one or more RF switches having a second on-off configuration and the phase shifter applying a second phase shift, wherein the first on-off configuration is different than the second on-off configuration and the first phase shift is different than the second phase shift.

2. The circuit of claim 1, wherein the first phase shift is 180 degrees or -180 degrees, and wherein the second phase shift is 0 degrees.

3. The circuit of any of claims 1-2, wherein the one or more RF switches comprise a first PIN diode, a second PIN diode, and a third PIN diode, wherein the first on-off configuration comprises the first PIN diode being in an off state, the second PIN diode being in an on state, and the third PIN diode being in the off state.

4. The circuit of claim 3, wherein the second on-off configuration comprises the first PIN diode being in an on state, the second PIN diode being in an off state, and the third PIN diode being in the on state.

5. The circuit of any of claims 3-4, wherein the on state is a forward biased state, and wherein the off state is a reverse biased state.

6. The circuit of any of claims 1-5, wherein a discrete or a continuously variable high-power phase shifter controls a relative phase between the second RF signal and the third RF signal for beamforming.

7. The circuit of any of claims 1-6, wherein an output of the first output port is routed to a first antenna, and wherein an output of the second output port is routed to a second antenna.

8. The circuit of any of claims 1-7, wherein an input impedance at the input port is approximately impedance matched to the source impedance and one or both of the first output port or the second output port impedances are impedance matched to the load impedances.

9. The circuit of claim 8, wherein the impedance matching and a power split after the input port are decided by values of *N*₁ and *N*₂, wherein *N*₁ corresponds to a first impedance scaling constant, wherein *N*₂ corresponds to a second impedance scaling constant, and wherein *N*₁ multiplied with *N*₂ is approximately equal to 2.4.

10. The circuit of any of claims 1-9, further comprising, one or more quarter wave networks configured to cancel out a phase length of an isolation resistor to increase isolation between the first output port and the second output port.

11. The circuit of any of claims 1-10, wherein the phase shifter is a switched phase shifter comprising a 90-degree hybrid and two PIN diodes.

12. A method comprising:
receiving, by a first input port of a circuit comprising one or more RF switches and a phase shifter, a first radio frequency (RF) signal; and
performing, by the circuit, one or both of:
splitting the first RF signal into a second RF signal and a third RF signal in response to the one or more RF switches having a first on-off configuration and the phase shifter applying a first phase shift, wherein the second RF signal and the third RF signal are substantially equal in power, wherein the second RF signal is routed to a first output port, and wherein the third RF signal is routed to a second output port; and
passing the first RF signal to the second output port in response to the one or more RF switches having a second on-off configuration and the phase shifter applying a second phase shift, wherein the first on-off configuration is different than the second on-off configuration and the first phase shift is different than the second phase shift.

13. The method of claim 12, wherein the first phase shift is 180 degrees or -180 degrees and wherein the second phase shift is 0 degrees.

14. The method of any of claims 12-13, wherein the one or more RF switches comprise a first PIN diode, a second PIN diode, and a third PIN diode, wherein the first on-off configuration comprises the first PIN diode being in an off state, the second PIN diode being in an on state, and the third PIN diode being in the off state, and wherein the second on-off configuration comprises the first PIN diode being in an on state, the second PIN diode being in an off state, and the third PIN diode being in the on state.

15. A Traffic Alert and Collision Avoidance System (TCAS) comprising:
a receiver;
a first antenna;
a second antenna; and
a transmitter comprising:
an input port configured to receive a first radio frequency (RF) signal;
a first output port connected to the first antenna;
a second output port connected to the second antenna;
a phase shifter; and
one or more RF switches
wherein the TCAS is configured to:
split the first RF signal into a second RF signal and a third RF signal in response to the one or more RF switches having a first on-off configuration and the phase shifter applying a first phase shift, wherein the second RF signal and the third RF signal are substantially equal in power, wherein the second RF signal is routed to the first output port, and wherein the third RF signal is routed to the second output port; and
pass the first RF signal to the second output port in response to the one or more RF switches having a second on-off configuration and the phase shifter applying a second phase shift, wherein the first on-off configuration is different than the second on-off configuration and the first phase shift is different than the second phase shift.
